# EUROPEAN PATENT APPLICATION

(11) **EP 2 117 235 A2**
(43) Date of publication of application: **11.11.2009**
(21) Application number: 09159876.3
(22) Date of filing: 11.05.2009
(51) Int. Cl.: H04N 7/26, H04N 7/36, H04N 7/50

(54) **Apparatus and method for managing reference frame buffer in layered video coding**

(30) Priority: 10.05.2008 KR 20080043691; 13.04.2009 KR 20090031682
(71) Applicant: Samsung Electronics Co., Ltd., Suwon-si Gyeonggi-do 443-742 (KR)
(72) Inventor: Kim, Dae Hee, 443-768, Gyeonggi-do (KR); Choi, Woong Il, 445-739, Gyeonggi-do (KR); Cho, Dae Sung, 135-926, Seoul (KR)
(74) Representative: Land, Addick Adrianus Gosling

(57) **Abstract**

An apparatus for encoding or decoding an image by storing and managing a reference frame used to encode or decode an encoding target image frame. To encode image frames classified into a plurality of layers, the apparatus may include a layer identification unit identifying a layer that includes a first encoding target frame, a frame storage unit storing at least one storage frame associated with the first encoding target frame, a reference frame selector selecting a reference frame from the at least one storage frame, based on the identified layer, and a frame encoder encoding the first encoding target frame by referring to the selected reference frame, wherein the frame storage unit stores the first encoding target frame as a storage frame associated with a second encoding target frame.

## Description

One or more example embodiments of the present disclosure relate to an apparatus for encoding or decoding an image, and more particularly, to an apparatus and method of storing and managing a reference frame used to encode or decode an encoding target image frame.

Current and future communication environments are rapidly changing beyond the traditional division between a wired region and a wireless region, or between a regional and national division. Particularly, in addition to image and voice data, various types of information required by a user are collectively provided in real time. A digital television system that processes motion pictures into digital data to thereby transmit and receive the processed digital data in real time and display the digital data has been realized. In addition, a mobile communication network that displays a real-time transmitted motion picture on a personal portable device is being commercialized.

Since the bandwidth of mobile communication networks is limited, there is a need for a scheme of effectively encoding motion pictures transmitted over the mobile communications network. Proposed techniques to effectively encode motion pictures, include a layered prediction encoding scheme that can divide the motion pictures into a plurality of image frames according to a temporal sequence, classify the image frames into a plurality of layers, and encode the layered image frames.

According to the layered prediction encoding scheme, all the image frames included in all the layers are not required to decode an image frame included in a particular layer. Specifically, it is possible to decode the image frame included in the particular layer using only an image frame of a partial layer. Accordingly, even when only a portion of encoded data is transmitted, a receiver may play an image.

Also, according to the layered prediction encoding scheme, reference frames for decoding a particular image frame may be included in different layers. In this case, in order to manage the reference frames included in the different layers, a number of buffers equal to the number of layers is required. Also, a very complex buffer management scheme is required since a plurality of the buffers is used.

One or more example embodiments of the present disclosure may provide a method and apparatus that can simplify management of a reference image using only a single buffer for a process of encoding or decoding an image classified into a plurality of layers.

According to example embodiments, an apparatus for encoding image frames classified into a plurality of layers is provided. The apparatus includes a layer identification unit identifying a layer that includes a first encoding target frame, a frame storage unit storing at least one storage frame associated with the first encoding target frame, a reference frame selector selecting a reference frame from the at least one storage frame, based on the identified layer, and a frame encoder encoding the first encoding target frame by referring to the selected reference frame, wherein the frame storage unit stores the first encoding target frame as a storage frame associated with a second encoding target frame.

According to other example embodiments, an apparatus for decoding a multi-layered encoded image is provided. The apparatus includes a layer identification unit identifying a layer that includes a first decoding target frame, a frame storage unit storing at least one storage frame associated with the first decoding target frame, a reference frame selector selecting a reference frame from the at least one storage frame based on the identified layer, and a frame decoder decoding the first decoding target frame by referring to the selected reference frame, wherein the frame storage unit stores the first decoding target frame as a storage frame associated with a second decoding target frame.

According to still other example embodiments, a method for decoding a multi-layered encoded image using an image decoding apparatus is provided. The method includes identifying a layer that includes a first decoding target frame, storing and maintaining at least one storage frame associated with the first decoding target frame, selecting a reference frame from the at least one storage frame based on the identified layer, decoding, by the image decoding apparatus, the first decoding target frame by referring to the selected reference frame, and storing and maintaining the first decoding target frame as a storage frame associated with a second decoding target frame.

According to example embodiments, it is possible to simply manage a reference image using only a single buffer for a process of encoding or decoding an image classified into a plurality of layers.

Additional aspects, features, and/or advantages will be set forth in part in the description which follows and, in part, will be apparent from the description, or may be learned by practice of the example embodiments.

These and/or other aspects and advantages will become apparent and more readily appreciated from the following description of the embodiments, taken in conjunction with the accompanying drawings of which:
FIG. 1 is a diagram illustrating a structure of an apparatus for encoding image frames classified into a plurality of layers according to example embodiments;
FIG. 2 illustrates a concept of encoding image frames classified into a plurality of layers according to example embodiments;
FIG. 3 is a block diagram illustrating a structure of a multi-layered image encoding apparatus according to example embodiments;
FIGS. 4A through 4F illustrate an operation of a frame storage unit that stores storage frames of different layers according to example embodiments;
FIG. 5 is a block diagram illustrating a structure of a multi-layered encoded image decoding apparatus according to example embodiments;
FIG. 6 is a flowchart illustrating a method of decoding multi-layered encoded image frames according to example embodiments;
FIG. 7 is a block diagram illustrating a structure of a multi-layered image encoding apparatus according to other example embodiments; and
FIG. 8 is a block diagram illustrating a structure of a multi-layered encoded image decoding apparatus according to other example embodiments.

Reference will now be made in detail to example embodiments, which are illustrated in the accompanying drawings, wherein like reference numerals refer to the like elements throughout. Example embodiments are described below to explain the present disclosure by referring to the figures.

The term "frame" used herein denotes data to store image data at a particular point in time of a motion picture. According to example embodiments, the frame may include a plurality of fields that include information associated with a portion of a single image. For example, in a motion picture using an interlace scheme, a single frame may include the plurality of fields. The plurality of fields may alternately express the single frame.

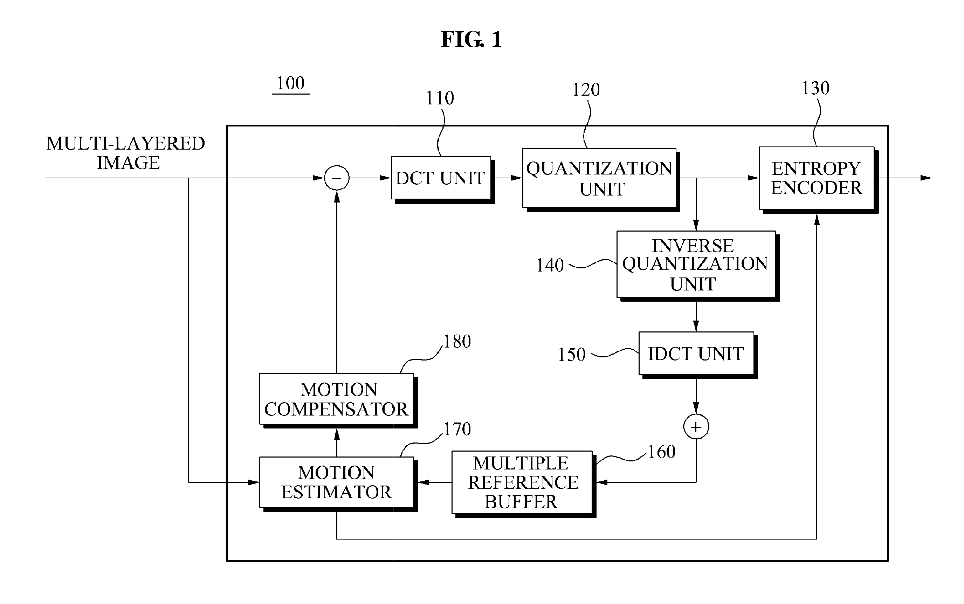

FIG. 1 is a diagram illustrating a structure of an apparatus 100 for encoding image frames classified into a plurality of layers according to example embodiments. Hereinafter, an operation of the multi-layered image encoding apparatus 100 will be described in detail with reference to FIG. 1. The multi-layered image encoding apparatus includes, for example, a discrete cosine transform (DCT) unit 110, a quantization unit 120, an entropy encoder 130, an inverse quantization unit 140, an inverse discrete cosine transform (IDCT) unit 150, a multiple reference buffer 160, a motion estimator 170, and a motion compensator 180.

The motion estimator 170 and the motion compensator 180 may generate a prediction image frame, with respect to an encoding target frame, based on a reference frame stored in the multiple reference buffer 160.

A difference between the prediction image frame generated at the motion compensator 180 and the encoding target frame of multi-layered image is entropy encoded in the entropy encoder 130 via the DCT unit 110 and the quantization unit 120. Also, the multi-layered image encoding apparatus 100 may couple the prediction image frame and a difference image that is restored via the inverse quantization unit 140 and the IDCT unit 150. The difference image with the coupled prediction image frame may be used to improve the accuracy of motion estimation.

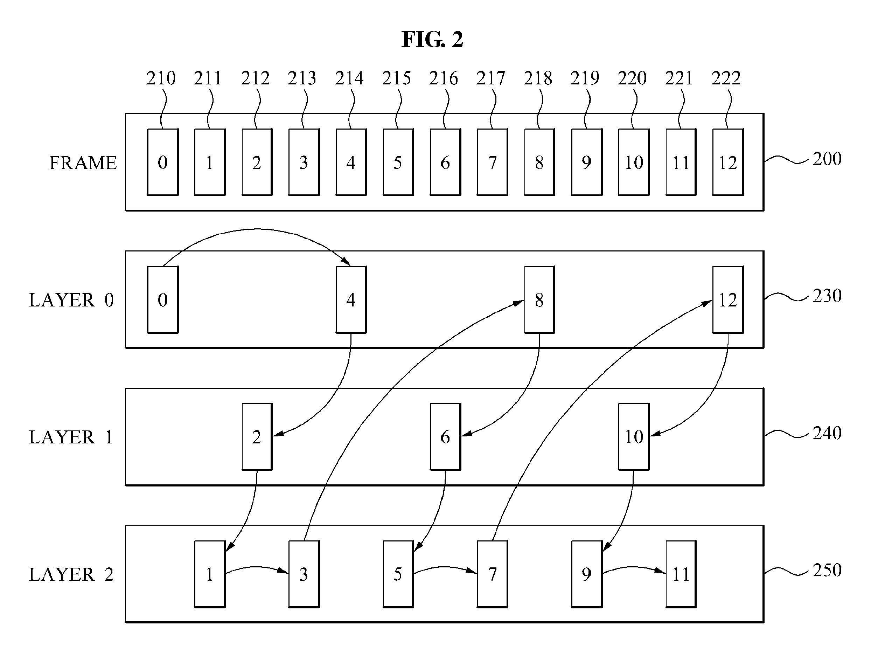

FIG. 2 illustrates a concept of encoding image frames classified into a plurality of layers according to example embodiments. Hereinafter, the concept of encoding the image frames classified into the plurality of layers will be described in detail with reference to FIG. 2.

Referring to FIG. 2, a plurality of image frames 200 includes, for example, an image frame (0) 210, an image frame (1) 211, an image frame (2) 212, an image frame (3) 213, an image frame (4) 214, an image frame (5) 215, an image frame (6) 216, an image frame (7) 217, an image frame (8) 218, an image frame (9) 219, an image frame (10) 220, an image frame (11) 221, and an image frame (12) 222. The plurality of image frames 200 are encoded by referring to each other. The plurality of image frames 200 are temporally associated with each other. Specifically, the image frame (1) 211 is a frame played after the image frame (0) 210, and the image frame (2) 212 is a frame played after the image frame (1) 211.

According to example embodiments, the plurality of image frames may be classified into a plurality of layers. In FIG. 2, the image frame (0) 210, the image frame (4) 214, the image frame (8) 218, and the image frame (12) 222 are included in a layer (0) 230.

The image frame (2) 212, the image frame (6) 216, and the image frame (10) 220 are included in a layer (1) 240. Also, the image frame (1) 211, the image frame (3) 213, the image frame (5) 215, the image frame (7) 217, the image frame (9) 219, and the image frame (11) 221 are included in a layer (2) 250.

Although the plurality of image frames 200 are classified into three layers in FIG. 2, embodiments are not limited thereto. Specifically, the plurality of image frames 200 may be classified into two layers and may also be classified into at least four layers.

For better comprehension and ease of description, layer (0) 230 is referred to as a bottom layer and layer (2) 250 is referred to as a top layer. Specifically, layer (1) 240 is an upper layer with respect to layer (0) 230, and layer (2) 250 is an upper layer with respect to layer (0) 230 and layer (1) 240. Conversely, layer (0) 230 is a lower layer with respect to layer
(1) 240 and layer (2) 250, and layer (1) 240 is a lower layer with respect to layer (2) 250.

According to example embodiments, an image frame included in a lower layer may be encoded by referring to a temporally preceding image frame among image frames included in the same layer, instead of referring to an image frame included in an upper layer. For example, referring to FIG. 2, the image frame (8) 218 may be encoded by referring to the image frame (0) 210 and the image frame (4) 214 included in the same layer.

According to example embodiments, an image frame included in an upper layer may be encoded by referring to an initially encoded image frame among all the image frames included in a lower frame. For example, referring to FIG. 2, the image frame (6) 216 included in the layer (1) 240 may be encoded by referring to the image frame (0) 210 and the image frame (4) 214 that temporally precede the image frame (6) 216 among image frames included in a lower layer.

The image frame (6) 216 may also be encoded by referring to the image frame (2) 212 that is encoded prior to the image frame (6) 216, among the image frame (2) 212 and the image frame (10) 220 included in the same layer. Also, the image frame (6) 216 may be encoded by referring to the image frame (8) 218 that is temporally later than the image frame (6) 216 but is encoded prior to the image frame (6) 216.

According to example embodiments, the encoding target frame may be encoded by referring to only encoded image frames prior to the encoding target frame.

According to example embodiments, after the image frame (0) 210 is encoded, the image frame (4) 214, included in the same layer (0) 230 as the image frame (0) 210, may be encoded by referring to the image frame (0) 210. The image frame (2) 212, included in the layer (1) 240, may be encoded by referring to the image frame (0) 210 and the image frame (4) 214 included in the lower layer (0) 230. Also, the image frame (1) 211, included in the layer (2) 250, may be encoded by referring to the image frame (0) 210, the image frame (4) 214, and the image frame (2) 212 included in the lower layers. Also, the image frame (3) 213, included in the layer (2) 250, may be encoded by referring to the image frame (0) 210, the image frame (4) 214, and the image frame (2) 212 that are encoded prior to the image frame (3) 213, among image frames include in the lower layers (0, 1) 230 and 240. Also, the image frame (3) 213 may be encoded by referring to the image frame (1) 211 that is encoded prior to the image frame (3) 213 and is included in the same layer as the image frame (3) 213.

Also, the image frame (8) 218, included in the layer (0) 230, may be encoded by referring to the image frame (0) 210 and the image frame (4) 214 included in the same layer (0) 230.

As described above, since the encoding target frame is encoded by referring to only an image frame included in the same layer or a lower layer of the encoding target frame, there is no need to consider an image frame included in an upper layer of the encoding target frame in order to decode an image frame included in a particular layer. Accordingly, a decoding procedure may be simplified.

Herein, a case where a user is enabled to select whether to decode all the image frames or whether to decode odd image frames is assumed. According to embodiments of FIG. 2, when only the odd image frames are decoded, even image frames included in the layer (2) 250 are not decoded. Therefore, a multi-layered encoded image decoding apparatus may decode a multi-layered encoded image by referring to only image frames included in the layer (0) 230 and the layer (1) 240.

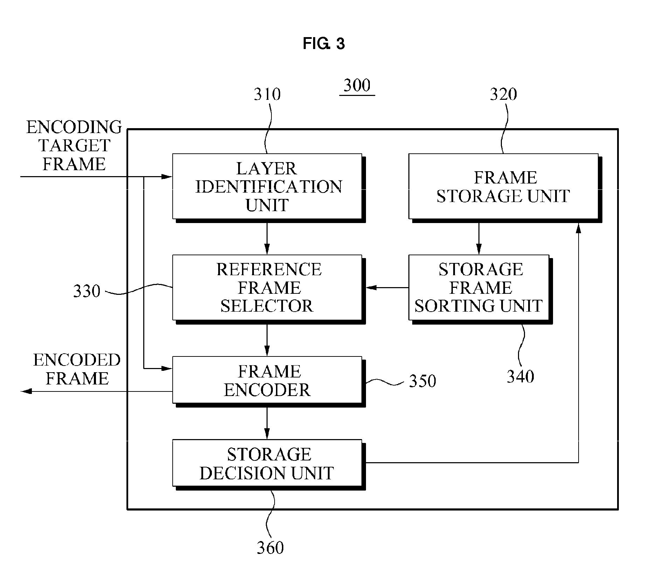

FIG. 3 is a block diagram illustrating a structure of a multi-layered image encoding apparatus 300 according to example embodiments. Hereinafter, an operation of the multi-layered image encoding apparatus 300 will be described in detail with reference to FIG. 3. The multi-layered image encoding apparatus 300 includes, for example, a layer identification unit 310, a frame storage unit 320, a reference frame selector 330, a storage frame sorting unit 340, a frame encoder 350, and a storage decision unit 360.

The layer identification unit 310 may identify a layer of a first encoding target frame. According to example embodiments, the first encoding target frame includes layer identification information for identifying the layer. The layer identification unit 310 may identify the layer of the first encoding target frame based on the layer identification information.

The frame storage unit 320 may store at least one storage frame associated with the first encoding target frame. According to example embodiments, the frame storage unit 320 may store encoded image frames prior to encoding of the first encoding target frame.

The reference frame selector 330 may select a reference frame from the at least one storage frame. According to example embodiments, the reference frame selector 330 may select the reference frame based on the layer of the first encoding target frame. Also, according to other example embodiments, the reference frame selector 330 may select, as reference frames, only storage frames that are included in the same layer as or a lower layer of the first encoding target layer.

According to example embodiments, the storage frame sorting unit 340 may sort the stored storage frames according to the layer that includes the storage frames. The reference frame selector 330 may select a reference frame based on the sorted storage frames.

According to example embodiments, the storage frame sorting unit 340 may sort the stored storage frames in an ascending order according to the layer that includes the storage frames. When the storage frames are sorted in ascending order according to the layer, storage frames included in a lower layer are positioned in a front portion. Therefore, the reference frame selector 330 may select, as reference frames, the front-positioned storage frames.

The frame encoder 350 may encode the first encoding target frame by referring to the selected reference frames. According to example embodiments, the frame encoder 350 may generate a prediction image frame with respect to the first encoding target frame based on the selected reference frames. The frame encoder 350 may encode a difference between the first encoding target frame and the prediction image frame.

The frame storage unit 320 may store the first encoding target frame of which encoding is completed, as a storage frame associated with a second encoding target frame.

According to example embodiments, the storage decision unit 360 may decide whether to store the first encoding target frame in the frame storage unit 320 as the storage frame, based on the layer that includes the first including target frame. Also, the frame storage unit 320 may store the first encoding target frame as the storage frame associated with the second encoding target frame depending on the decision of the storage decision unit 360. Accordingly, the frame storage unit 320 may store the first encoding target frame as the storage frame associated with the second encoding target frame. The stored first encoding target frame may be used as the reference frame with respect to the second encoding target frame.

According to example embodiments, there may be some constraint on a number of storage frames that can be stored in the frame storage unit 320 due to costs or storage space. As the first encoding target frame is stored as the storage frame associated with the second encoding target frame, at least one frame needs to be deleted from the at least one storage frame stored in the frame storage unit 320. When the storage decision unit 360 decides to store the first encoding target frame as the storage frame associated with the second encoding target frame, the frame storage unit 320 may delete an earliest storage frame from storage frames that are included in the same layer as or an upper layer of the first encoding target frame. Since the frame storage unit 320 stores frames that are temporally nearest to the second encoding target frame, storage frames stored in the frame storage unit 320 may be very similar to the second encoding target frame. Since reference frames selected from the stored storage frames are also similar to the second encoding target frame, the encoding efficiency of the frame encoder 350 may be enhanced.

According to example embodiments, when the layer of the first encoding target frame is a top layer, the storage decision unit 360 may decide not to store the first encoding target frame as the storage frame associated with the second encoding target frame. According to example embodiments, the frame storage unit 320 may store, as the storage frame, only an image frame included in another layer excluding the top layer, and may encode the second encoding target frame based on a reference frame selected from the stored storage frames. In embodiments where the image frame included in the top layer is not selected as the reference frame, when the first encoding target frame is included in the top layer, the first encoding target frame may not be selected as the reference frame with respect to the second encoding target frame. Therefore, the storage decision unit 360 may decide not to store, in the frame storage unit 320, the first encoding target frame included in the top layer.

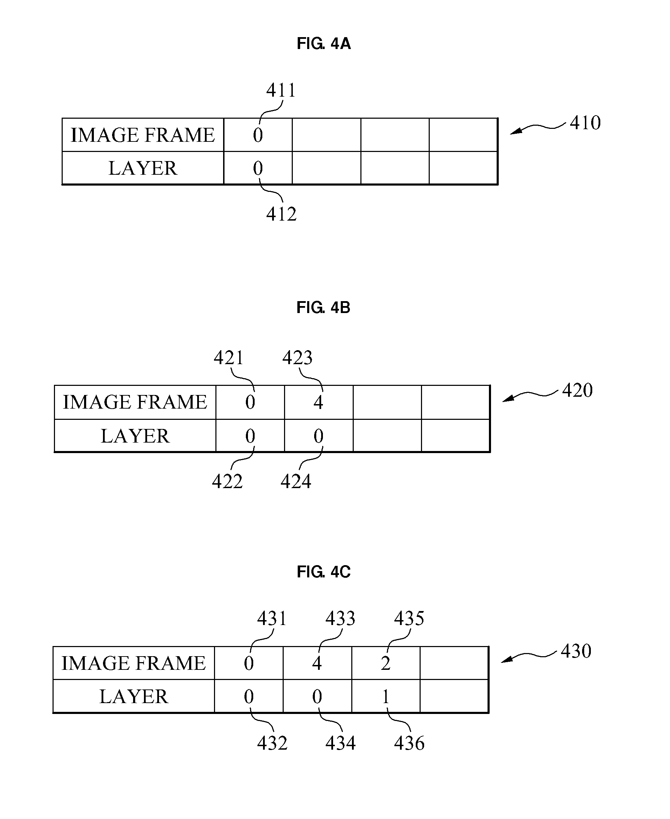

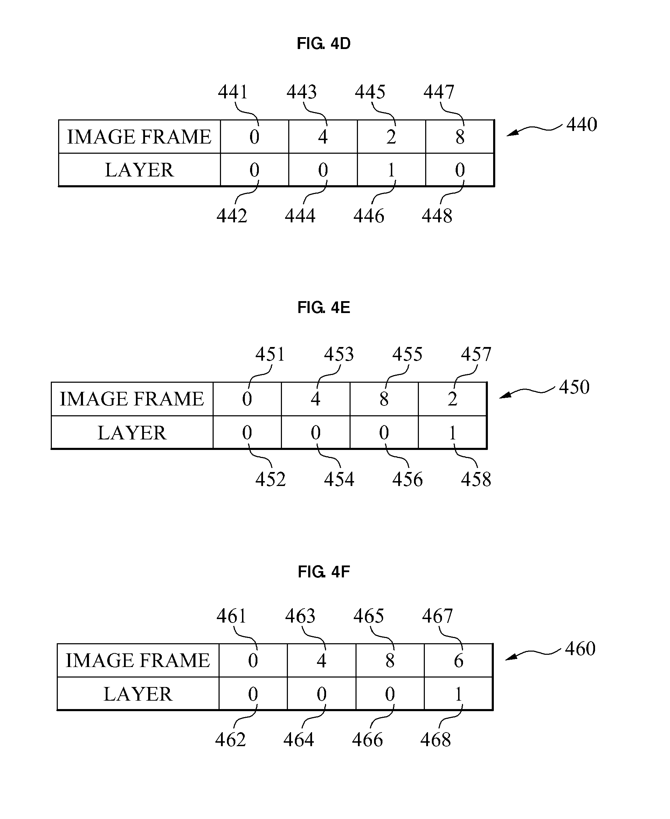

FIGS. 4A through 4F illustrate an operation of each frame storage unit that stores storage frames of different layers according to example embodiments. Hereinafter, the operation of the frame storage unit will be described in detail with reference to FIG. 4.

Hereinafter, under the assumption that image frames classified into a plurality of layers are constructed as the embodiments shown in FIG. 2, the operation of the frame storage unit will be described.

In this instance, although it is assumed that each storage frame unit of FIG. 4 may store four storage frames, a frame storage unit according to example embodiments may store four or more storage frames. Top cells of frame storage units 410, 420, 430, 440, 450, and 460 of operations shown in FIG. 4 denote a number of an image frame stored in the frame storage unit and bottom cells thereof denote a layer that includes a corresponding image frame.

Referring to FIG. 4A, when the image frame (0) 210 is encoded, the image frame (0) 210 may be stored in the frame storage unit 410 so that the image frame (0) 210 may be used as a reference frame with respect to subsequent image frames. Since the image frame (0) 210 is an initially encoded image frame, the frame storage unit 410 may store only the image frame (0) 210 as a storage frame (411). The layer including the image frame (0) 210 may be stored in a corresponding cell 412.

Referring to FIG. 4B, the image frame (4) 214 may be encoded by referring to the image frame (0) 210 that is included in the same layer (0) 230 among storage frames stored in the frame storage unit 420. Also, the image frame (4) 214 may be stored in a cell 423 so that the image frame (4) 214 may be used as a reference frame with respect to subsequent image frames. The layer (0) including the image frame (4) 214 may be stored in a corresponding cell 424.

Referring to FIG. 4C, the image frame (2) 212 may be encoded by referring to the image frame (0) 210 and the image frame (4) 214 that are included in a lower layer among storage frames stored in the frame storage unit 430. Also, the image frame (2) 212 may be stored in a cell 435 so that the image frame (2) 212 may be used as a reference frame with respect to subsequent image frames. The frame storage unit 430 may store the image frame (0) 210, the image frame (4) 214, and the image frame (2) 212 as storage frames. The layer (1) including the image frame (2) 212 may be stored in a corresponding cell 436.

According to example embodiments, even image frames included in the top layer 250 such as the image frame (1) 211 and the image frame (3) 213 may be encoded and then be used to encode another image frame. Also, in this case, the image frame (1) 213 and the image frame (3) 213 may be stored in the frame storage unit. However, FIG. 4 shows embodiments where the image frames included in the top layer 250 are not used to encode the other image frame. Therefore, the image frame (1) 213 and the image frame (3) 213 are not stored in the frame storage unit.

Referring to FIG. 4D, the image frame (8) 218 may be encoded by referring to the image frame (0) 210 and the image frame (4) 214 included in the same layer (0) 230 among storage frames stored in the frame storage unit 440. To be used as a reference frame with respect to subsequent image frames, the image frame (8) 218 may be stored in a cell 447. The frame storage unit 440 may store the image frame (0) 210, the image frame (4) 214, the image frame (2) 212, and the image frame (8) 218 as storage frames. The image frame (0) 210, the image frame (4) 214, and the image frame (8) 218 may be included in the layer (0) 230. The image frame (2) 212 may be included in the layer (1) 240.

According to example embodiments, a storage frame sorting unit may sort storage frames included in the frame storage unit according to a layer that includes each storage frame. According to example embodiments, the storage frame sorting unit may sort the storage frames in an ascending order according to the layer that includes each storage frame.

Referring to FIG. 4E, image frames stored in each cell 451, 453, 455, and 457 that are sorted in ascending order are the same as the image frames prior to the sorting, but the orders are changed. Information associated with layers that include the image frames are also changed to correspond to the image frames after sorting.

The image frame (6) 216 may be encoded by referring to the image frame (2) 212 included in the same layer (1) 240, and the image frame (0) 210, the image frame (4) 214, and the image frame (8) 218 that are stored in the lower layer (0) 230 among storage frames stored in the frame storage unit 450. To be used as a reference frame with respect to subsequent image frames, the image frame (6) 216 may be stored in the frame storage unit 450. However, since the frame storage unit 450 already stores four image frames, the image frame (6) 216 may be stored only after any one of the four image frames is deleted.

According to example embodiments, it is possible to delete an earliest storage frame from the image frame (2) 212 included in the same layer (1) 240 as the image frame (6) 216 and image frames included in the upper layer 250. In embodiments of FIG. 4E, the image frame (2) 212 included in the same layer (1) 240 is deleted.

Referring to FIG. 4F, the storage frame sorting unit may sort storage frames in which the image frame (2) 212 is deleted and the image frame (6) 216 is included in the storage frame unit 460. Image frame (0) 210, the image frame (4) 214, the image frame (8) 218, and the image frame (6) 216 are stored in each cell 461, 463, 465, 467 in sorted order. Layer information corresponding to each image frame is stored in each cell 462, 464, 466, and 468.

A reference frame selector may select storage frames that are positioned in a front portion, among storage frames sorted by the storage frame sorting unit, to thereby readily select storage frames included in a lower layer of or the same as a particular image frame.

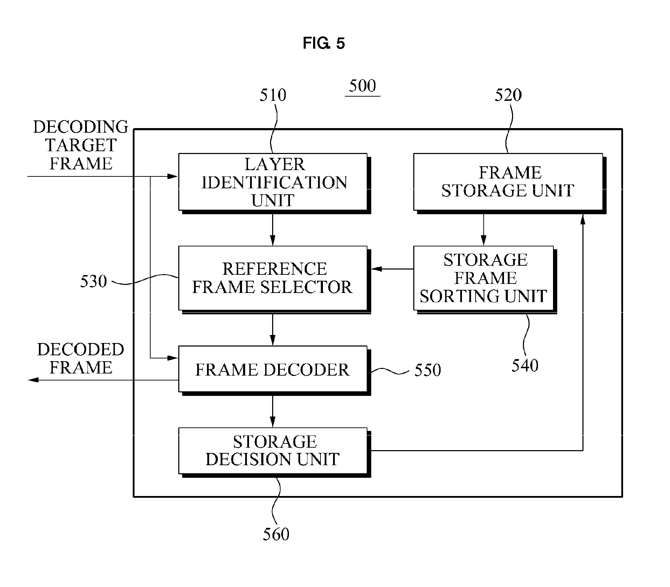

FIG. 5 is a block diagram illustrating a multi-layered encoded image decoding apparatus 500 for decoding multi-layered encoded image frames according to example embodiments. Hereinafter, an operation of the multi-layered encoded image decoding apparatus 500 will be described in detail with reference to FIG. 5. The multi-layered encoded image decoding apparatus 500 may include, for example, a layer identification unit 510, a frame storage unit 520, a reference frame selector 530, a storage frame sorting unit 540, a frame decoder 550, and a storage decision unit 560.

The layer identification unit 510 may identify a layer of a first decoding target frame. According to example embodiments, the first decoding target frame may include layer identification information for identifying the layer. The layer identification unit 510 may identify the layer of the first decoding target frame based on the layer identification information.

The frame storage unit 520 may store at least one storage frame associated with the first decoding target frame. According to example embodiments, the frame storage unit 520 may store decoded image frames prior to decoding of the first decoding target frame.

The reference frame selector 530 may select a reference frame from the at least one storage frame stored in the frame storage unit 520. According to example embodiments, the reference frame selector 530 may select the reference frame based on the layer of the first decoding target frame. According to other example embodiments, the reference frame selector 530 may select, as the reference frame, frames that temporally precede the first decoding target frame among storage frames included in the same layer as the first decoding target frame. According to still other example embodiments, the reference frame selector 530 may select, as the reference frame, storage frames that are included in the same as and a lower layer of the first decoding target frame.

An image frame may be decoded and then be stored as a storage frame. Therefore, a reference frame included in the same layer as the first decoding target frame may be an image frame that temporally precedes the first decoding target frame and thus is encoded prior to the first decoding target frame. Also, reference frames included in a lower layer of the first decoding target frame may be image frames that are temporally later than an image frame temporally preceding the first decoding target frame and the first decoding target frame, but are decoded prior to the first decoding target frame.

According to example embodiments, the storage frame sorting unit 540 may sort the stored storage frames according to the layer that includes the storage frames. The reference frame selector 530 may select a reference frame based on the storage frames sorted by the storage frame sorting unit 540.

According to example embodiments, the storage frame sorting unit 540 may sort the stored storage frames in an ascending order according to the layer that includes the storage frames. When the storage frames are sorted in ascending order according to the layer, storage frames included in a lower layer are positioned in a front portion. Since a storage frame included in the lower layer of, or in the same layer as, the decoding target frame is selected as the reference frame, the reference frame selector 530 may select, as the reference frame with respect to the decoding target frame, the front-positioned storage frames.

When it is assumed that the storage frame sorting unit 540 does not sort storage frames, a plurality of storage apparatuses may be required to store the storage frames according to a layer that includes the storage frames. However, when the storage frame sorting unit 540 sorts the storage frames, it is possible to simply select reference frames with respect to a decoding target frame using a single storage apparatus.

The frame decoder 550 may decode the first decoding target frame by referring to the selected reference frames. According to example embodiments, the frame decoder 550 may generate a prediction image frame with respect to the first decoding target frame based on the selected reference frames. The frame decoder 550 may generate information associated with a difference between the prediction image frame and the first decoding target frame based on encoded data in which the first decoding target frame is encoded. The frame decoder 550 may decode the first decoding target frame based on information associated with the difference between the prediction image frame and the first decoding target frame.

The frame storage unit 520 may store the first decoding target frame, for which decoding is completed, as a storage frame associated with a second decoding target frame.

According to example embodiments, the storage decision unit 560 may decide whether to store the first decoding target frame in the frame storage unit 520 as the storage frame, based on the layer that includes the first decoding target frame. Also, the frame storage unit 520 may store the first decoding target frame as the storage frame associated with the second decoding target frame depending on decision of the storage decision unit 560. Accordingly, the frame storage unit 520 may store the first decoding target frame as the storage frame associated with the second decoding target frame. The stored first decoding target frame may be used as the reference frame with respect to the second decoding target frame.

According to example embodiments, there may be some constraint on a number of storage frames that can be stored in the frame storage unit 520 due to costs or available storage space. As the first decoding target frame is stored as the storage frame associated with the second decoding target frame, at least one frame needs to be deleted from the at least one storage frame stored in the frame storage unit 520. When the storage decision unit 560 decides to store the first decoding target frame as the storage frame associated with the second decoding target frame, the frame storage unit 520 may delete an earliest storage frame from storage frames that are included in the same layer as or an upper layer of the first decoding target frame. Since the frame storage unit 520 stores frames that are temporally nearest to the second decoding target frame, storage frames stored in the frame storage unit 520 may be very similar to the second decoding target frame. Since reference frames selected from the stored storage frames are also similar to the second decoding target frame, the decoding efficiency of the frame decoder 550 may be enhanced.

According to example embodiments, when the layer of the first decoding target frame is a top layer, the storage decision unit 560 may decide not to store the first decoding target frame as the storage frame associated with the second decoding target frame. According to example embodiments, the frame storage unit 520 may store, as the storage frame, only an image frame that is included in another layer excluding the top layer. The frame decoder 550 may decode the second decoding target frame based on a reference frame selected from the stored storage frames. In embodiments where the image frame included in the top layer is not selected as the reference frame, when the first decoding target frame is included in the top layer, the first decoding target frame may not be selected as the reference frame with respect to the second decoding target frame. Therefore, the storage decision unit 560 may decide not to store, in the frame storage unit 520, the first decoding target frame included in the top layer.

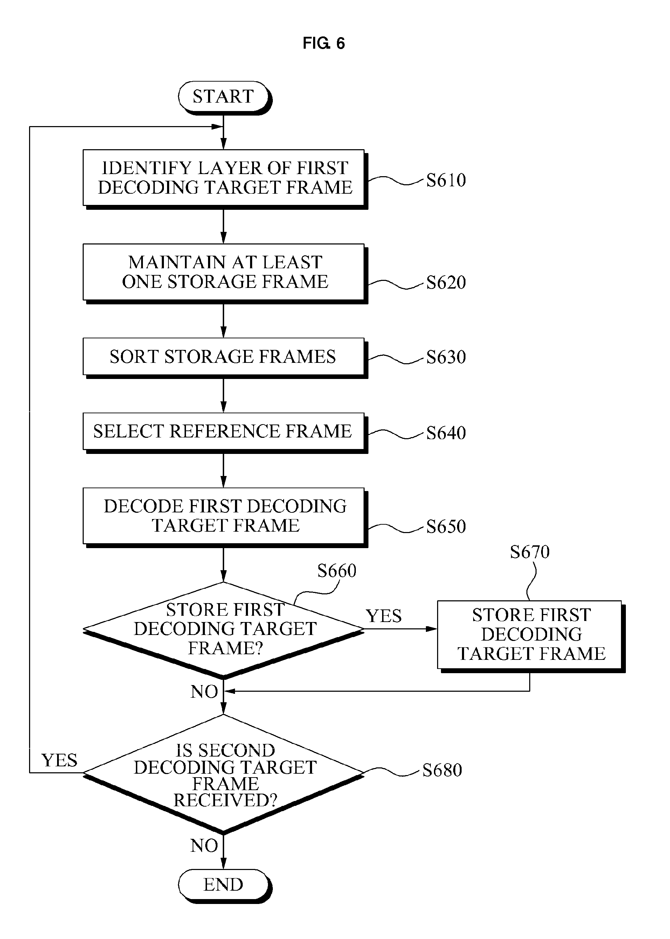

FIG. 6 is a flowchart illustrating a method of decoding multi-layered encoded image frames according to example embodiments. Hereinafter, the multi-layered encoded image decoding method will be described in detail with reference to FIG. 6.

In operation S610, the multi-layered encoded image decoding method may identify a layer that includes a first decoding target frame. According to example embodiments, layer identification information may be included to identify the layer of the first decoding target frame. In operation S610, the multi-layered encoded image decoding method may identify the layer of the first decoding target frame based on the layer identification information.

In operation S620, the multi-layered encoded image decoding method may store and maintain at least one storage frame associated with the first decoding target frame. According to example embodiments, the at least one storage frame may be already decoded prior to decoding of the first decoding target frame.

In operation S630, the multi-layered encoded image decoding method may sort storage frames according to a layer that includes each storage frame. According to example embodiments, the multi-layered encoded image decoding method may sort the storage frames in an ascending order according to the layer in operation S630. When the storage frames are sorted in ascending order, the storage frames included in a lower layer are positioned in a front portion.

In operation S640, the multi-layered encoded image decoding method may select a reference frame from the storage frames. According to example embodiments, it is possible to select the reference frame based on the layer that includes the first decoding target frame. Also, it is possible to select, as the reference frame, a storage frame included in the same layer as the first decoding target frame or a storage frame included in a lower layer of the first decoding target frame.

According to example embodiments, the multi-layered encoded image decoding method may select the reference frame based on the storage frames sorted in operation S630, in operation S640. When the storage frames are sorted in ascending order, storage frames included in a lower layer are positioned in a front portion. Therefore, it is possible to readily select storage frames included in the lower layer of or the same layer as the first decoding target frame.

In operation S650, the multi-layered encoded image decoding method may decode the first decoding target frame by referring to the selected reference frame. According to example embodiments, the multi-layered encoded image decoding method may generate a prediction image frame with respect to the first decoding target frame based on the selected reference frame in operation S650. Also, the multi-layered encoded image decoding method may generate information associated with a difference between the prediction image frame and the first decoding target frame based on encoded data in which the first decoding target frame is encoded. Also, the multi-layered encoded image decoding method may decode the first decoding target frame based on information associated with the difference between the prediction image frame and the first decoding target frame in operation S640.

In operation S660, the multi-layered encoded image decoding method may decide whether to store the first decoding target frame as the storage frame associated with the second decoding target frame. According to example embodiments, when the first decoding target frame is included in a top layer, the multi-layered encoded image decoding method may not store the first decoding target frame as the storage frame associated with the second decoding target frame. Also, when the first decoding target frame is included in another layer excluding the top layer, the multi-layered encoded image decoding method may decide to store the first decoding target frame as the storage frame associated with the second decoding target frame.

In operation S670, when it is decided to store the first decoding target frame in operation S660, the multi-layered encoded image decoding method may store the first decoding target frame as the storage frame associated with the second decoding target frame according to decision of operation S660.

In operation S680, the multi-layered encoded image decoding method may determine whether the second decoding target frame associated with the first decoding target frame is received. When the second decoding target frame is received, the second decoding target frame may be decoded using storage frames. Conversely, when the second decoding target frame is not received, a decoding procedure is terminated.

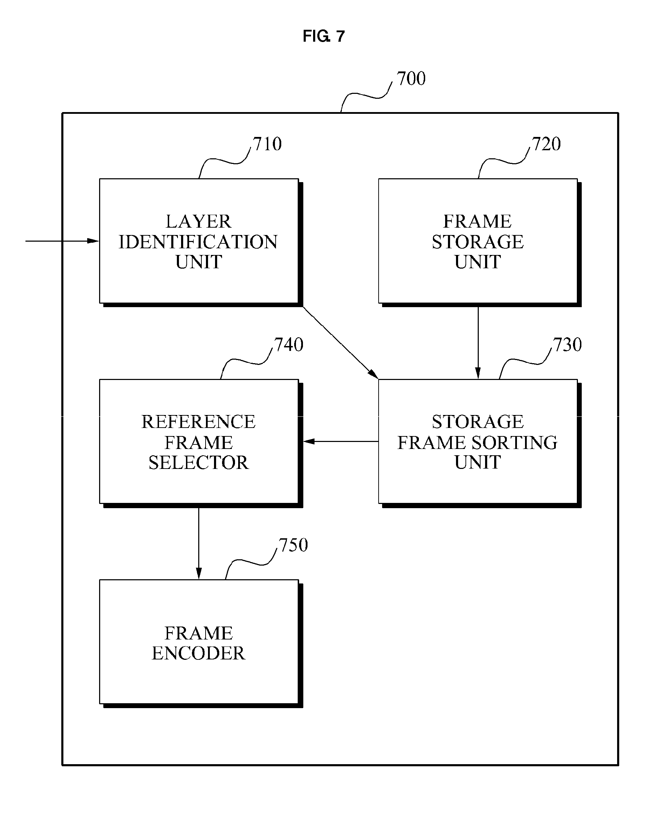

FIG. 7 is a block diagram illustrating a structure of a multi-layered image encoding apparatus 700 according to example embodiments. Hereinafter, an operation of the multi-layered image encoding apparatus 700 will be described in detail with reference to FIG. 7. The multi-layered image encoding apparatus 700 includes, for example, a layer identification unit 710, a frame storage unit 720, a storage frame sorting unit 730, a reference frame selector 740, and a frame encoder 750.

The layer identification unit 710 may identify a layer that includes an encoding target frame. According to example embodiments, an input image may include image frames that are classified into a plurality of layers. The encoding target frame may be included in any one of the image frames.

The frame storage unit 720 may store at least one storage frame associated with the encoding target frame. The stored at least one storage frame may be used as a reference frame to encode the encoding target frame.

The storage frame sorting unit 730 may sort storage frames stored in the frame storage unit 720. According to example embodiments, the storage frame sorting unit 730 may sort the storage frames according to a layer that includes the storage frames.

The reference frame selector 740 may select a reference frame based on the layer that includes the encoding target frame. According to example embodiments, the reference frame selector 740 may select, as the reference frame, a storage frame included in the same layer as or a lower layer of the encoding target frame.

When the storage frame sorting unit 730 sorts the storage frames in an ascending order according to the layer that includes the storage frames, storage frames included in a lower layer are positioned in a front portion of the frame storage unit 720. Therefore, the reference frame selector 740 may select, as the reference frame, the front-positioned storage frames.

According to other example embodiments, the reference frame selector 740 may select, as the reference frame, a storage frame that precedes the encoding target frame, among storage frames included in the same layer as the encoding target frame. When the storage frames are sorted according to a corresponding layer, storage frames included in the same layer as the encoding target frame are consecutively positioned with respect to each other. The reference frame selector 740 may select, as the reference frame, a storage frame that temporally precedes the encoding target frame among storage frames that are consecutively stored in the frame storage unit 720, and are included in the same layer as the encoding target frame.

According to example embodiments, storage frames included in different layers may be stored in the same frame storage unit 720. As far as the storage frames are sorted according to a layer that includes the storage frames, it is possible to clearly classify the storage frames of the different layers without using a plurality of storage frames.

According to example embodiments, the multi-layered image encoding apparatus 700 may be configured using only the single frame storage unit 720 and thus an encoding process may be simplified.

The frame encoder 750 may encode the encoding target frame by referring to the selected reference frame.

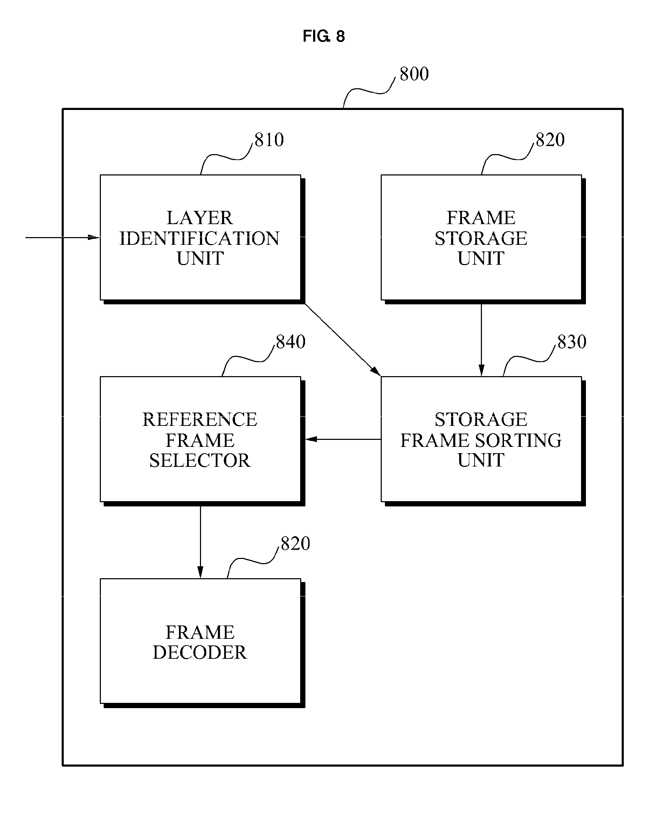

FIG. 8 is a block diagram illustrating a structure of a multi-layered encoded image decoding apparatus 800 according to example embodiments. Hereinafter, an operation of the multi-layered encoded image decoding apparatus 800 will be described in detail with reference to FIG. 8. The multi-layered encoded image decoding apparatus 800 includes, for example, a layer identification unit 810, a frame storage unit 820, a storage frame sorting unit 830, a reference frame selector 840, and a frame decoder 850.

The layer identification unit 810 may identify a layer that includes a decoding target frame. According to example embodiments, an input image may include image frames that are classified into a plurality of layers. The decoding target frame may be included in any one of the image frames.

The frame storage unit 820 may store at least one storage frame associated with the decoding target frame. The stored at least one storage frame may be used as a reference frame to decode the decoding target frame.

The storage frame sorting unit 830 may sort storage frames stored in the frame storage unit 820. According to example embodiments, the storage frame sorting unit 830 may sort the storage frames according to a layer that includes the storage frames.

The reference frame selector 840 may select a reference frame based on the layer that includes the decoding target frame. According to example embodiments, the reference frame selector 840 may select, as the reference frame, a storage frame included in the same layer as or a lower layer of the decoding target frame.

When the storage frame sorting unit 830 sorts the storage frames in an ascending order according to the layer that includes the storage frames, storage frames included in a lower layer are positioned in a front portion of the frame storage unit 820. Therefore, the reference frame selector 840 may select, as the reference frame, the front-positioned storage frames.

According to other example embodiments, the reference frame selector 840 may select, as the reference frame, a storage frame that precedes the decoding target frame, among storage frames included in the same layer as the decoding target frame. When the storage frames are sorted according to a corresponding layer, storage frames included in the same layer as the decoding target frame are consecutively positioned with respect to each other. The reference frame selector 840 may select, as the reference frame, a storage frame that temporally precedes the decoding target frame among storage frames that are consecutively stored in the frame storage unit 820 and are included in the same layer as the decoding target frame.

According to example embodiments, storage frames included in different layers may be stored in the same frame storage unit 820. As far as the storage frames are sorted according to a layer that includes the storage frames, it is possible to clearly classify the storage frames of the different layers without using a plurality of storage frames.

According to example embodiments, the multi-layered encoded image decoding apparatus 800 may be configured using only the single frame storage unit 820 and thus an encoding process may be simplified.

The frame decoder 850 may decode the decoding target frame by referring to the selected reference frame.

The multi-layered image encoding/decoding method according to the above-described example embodiments may be recorded as computer readable code/instructions in/on a computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments.

Although a few example embodiments have been shown and described, it would be appreciated by those skilled in the art that changes may be made in these example embodiments without departing from the principles and spirit of the present disclosure, the scope of which is defined in the claims and their equivalents.

## Claims

1. An apparatus for encoding image frames classified into a plurality of layers, the apparatus comprising:
a frame storage unit to store at least one storage frame associated with a first encoding target frame;
a reference frame selector to select a reference frame from the at least one storage frame, based on an identified layer that includes the first decoding target frame; and
a frame encoder to encode the first encoding target frame by referring to the selected reference frame.

2. The apparatus of claim 1, further comprising:
a storage decision unit to decide whether to store the first encoding target frame based on the identified layer,
wherein the frame storage unit stores the first encoding target frame as a storage frame associated with a second encoding target frame, depending on the decision, and/or
wherein when the storage decision unit decides to store the first encoding target frame, the frame storage unit deletes an earliest storage frame, from storage frames that are included in the same layer as, or an upper layer of, the first encoding target frame.

3. The apparatus of claim 1 or 2, wherein when the identified layer is a top layer, the storage decision unit decides not to store the first encoding target frame, and/or
wherein the reference frame selector selects, as the reference frame, a storage frame included in the same layer as the first encoding target frame or a storage frame included in a lower layer of the first encoding target frame, and/or
wherein the frame encoder generates a prediction image frame with respect to the first encoding target frame based on the reference frame, and encodes a difference between the prediction image frame and the first encoding target frame.

4. The apparatus of claim 3, further comprising:
a storage frame sorting unit to sort storage frames according to the layer that includes the storage frame,
wherein the reference frame selector selects the reference frame based on the sorted storage frames.

5. An apparatus for decoding a multi-layered encoded image, the apparatus comprising:
a frame storage unit to store at least one storage frame associated with a first decoding target frame;
a reference frame selector to select a reference frame from the at least one storage frame based on an identified layer that includes the first decoding target frame; and
a frame decoder to decode the first decoding target frame by referring to the selected reference frame.

6. The apparatus of claim 5, further comprising:
a storage decision unit to decide whether to store the first decoding target frame based on the identified layer,
wherein the frame storage unit stores the first decoding target frame as a storage frame associated with a second decoding target frame, depending on the decision.

7. The apparatus of claim 5 or 6, further comprising:
a storage frame sorting unit to sort storage frames according to the layer that includes the storage frame,
wherein the reference frame selector selects the reference frame based on the sorted storage frames, and/or
wherein, when the identified layer is a top layer, the storage decision unit decides not to store the first decoding target frame, and/or
wherein the reference frame selector selects, as the reference frame, a storage frame included in the same layer as the first decoding target frame or a storage frame included in a lower layer of the first decoding target frame.

8. A method for decoding a multi-layered encoded image using an image decoding apparatus, the method comprising:
storing at least one storage frame associated with a first decoding target frame; selecting a reference frame from the at least one storage frame based on an identified layer that includes the first decoding target frame; and
decoding, by the image decoding apparatus, the first decoding target frame by referring to the selected reference frame.

9. The method of claim 8, further comprising:
deciding whether to store the first decoding target frame based on the identified layer,
wherein the storing of the first decoding target frame stores the first decoding target frame as a storage frame associated with a second decoding target frame, depending on the deciding.

10. The method of claim 8 or 9, further comprising:
sorting the storage frames according to the layer that includes the storage frame,
wherein the selecting selects the reference frame based on the sorted storage frames, and/or
wherein, when the identified layer is a top layer, the deciding decides not to store the first decoding target frame, and/or
wherein the selecting selects, as the reference frame, a storage frame included in the same layer as the first decoding target frame or a storage frame included in a lower layer of the first decoding target frame.

11. At least one computer-readable recording medium storing computer readable code comprising a program for implementing the method of any of claims 8-10.

12. An apparatus for encoding image frames classified into a plurality of layers, the apparatus comprising:
a layer identification unit to identify a layer that includes an encoding target frame;
a frame storage unit to store at least one storage frame associated with the encoding target frame;
a storage frame sorting unit to sort the at least one storage frame according to a layer that includes the at least one storage frame;
a reference frame selector to select a reference frame from the sorted the at least one storage frame, based on the identified layer; and
a frame encoder to encode the encoding target frame by referring to the selected reference frame.

13. The apparatus of claim 12, wherein the reference frame selector selects, as the reference frame, a frame that is encoded and is stored prior to the encoding target frame, among storage frames included in the same layer as the encoding target frame or storage frames included in a lower layer of the encoding target frame.

14. An apparatus for decoding a multi-layered encoded image, the apparatus comprising:
a layer identification unit to identify a layer that includes a decoding target frame;
a frame storage unit to store at least one storage frame associated with the decoding target frame;
a storage frame sorting unit to sort the at least one storage frame according to a layer that includes the at least one storage frame;
a reference frame selector to select a reference frame from the sorted at least one storage frame, based on the identified layer; and
a frame decoder to decode the decoding target frame by referring to the selected reference frame.

15. The apparatus of claim 14, wherein the reference frame selector selects, as the reference frame, a frame that is decoded and is stored prior to the decoding target frame, among storage frames included in the same layer as the decoding target frame or storage frames included in a lower layer of the decoding target frame.
